# EUROPEAN PATENT APPLICATION

(11) **EP 1 930 385 A1**
(43) Date of publication of application: **11.06.2008**
(21) Application number: 06796989.9
(22) Date of filing: 29.08.2006
(51) Int. Cl.: C09D 133/16, C04B 41/63, C04B 41/64, C09D 5/02, C09D 151/06, C09D 175/04, C09D 183/04

(54) **AQUEOUS SURFACE TREATING AGENT AND SURFACE-TREATED STRUCTURE**

(30) Priority: 30.08.2005 JP 2005249452
(71) Applicant: Asahi Glass Company, Limited, Chiyoda-ku Tokyo 100-8405 (JP)
(72) Inventor: ASADA, Shigenori, Shiga 523-0062 (JP); IBUKI, Hitoshi, Osaka 566-0023 (JP); MAEKAWA, Takashige, Tokyo 100-8405 (JP); SUGIYAMA, Kazunori, Tokyo 100-8405 (JP)
(74) Representative: Müller-Boré & Partner Patentanwälte
(86) International application number: PCT/JP2006/317012
(87) International publication number: WO 2007/026716

(57) **Abstract**

To provide a stable aqueous surface treating agent for architectural/civil engineering structures, which can impart excellent water repellency and oil repellency (water proofness and oil proofness), antifouling properties, weather resistance and durability thereof to structures made of architectural/civil engineering materials such as stones or concrete, particularly porous materials.

The aqueous surface treating agent comprises at least one fluoropolymer (A) selected from a polyfluoroalkyl group-containing poly(meth)acrylate (A1) and a polyfluoroalkyl group-containing polyurethane (A2) in an aqueous medium. The aqueous surface treating agent usually contains a surfactant (B), and preferably contains a silicone (C), and further (D) a silane compound having a hydrolyzable group and/or a partially hydrolyzed condensate of a silane compound having a hydrolyzable group.

## Description

### TECHNICAL FIELD

The present invention relates to an aqueous surface treating agent for architectural/civil engineering structures to impart excellent water and oil repellency, antifouling properties and weather resistance to structures such as architectures and buildings, and a structure made of a surface-treated architectural/civil engineering material.

### BACKGROUND ART

Heretofore, an alkyl alkoxysilane (and its condensate) has been used as an active ingredient of a permeation inhibiting agent, a water absorption-inhibiting agent or a stainproofing agent to suppress stain by water and growth of fungi on structures made of architectural/civil engineering materials such as stones and concrete, such as architectures and buildings. An alkyl alkoxysilane is considered to suppress various degradation phenomena by permeation of moisture or the like, by forming a thick hydrophobic layer on the surface portion of a structure to impart water absorption inhibiting performance which lasts a long time. The alkyl alkoxysilane is likely to condense by hydrolysis reaction to be formed into a polymer and is hardly present stably in an aqueous composition. Accordingly, it is usually diluted with an organic solvent and used as a solvent type composition, but for the application to surface treatment of structures, an organic solvent has such problems that it can not be applied to a wet concrete surface, it is less likely to permeate into a base material if the evaporation rate is too high, and the coated surface tends to look wet, thus changing the texture of the base material, if the evaporation rate is low. Further, an aqueous composition has been desired from the viewpoint of natural environment and work environment, along with increasing environmental awareness in recent years in addition to a problem of inflammability.

As an aqueous alkyl alkoxysilane composition, an aqueous solution or an aqueous dispersion having an alkyl alkoxysilane aqueous-emulsified with a nonionic emulsifier has been proposed (Patent Document 1). However, this composition provides low water repellency on the coated surface as compared with the solvent type composition, and the initial water repellency decreases in a short time upon exposure to the outside.

In recent years, architecture, buildings, etc. are required to have oil repellency in addition to water repellency imparted due to e.g. pollution of historic buildings by exhaust gas.

As a component capable of imparting antifouling performance including oil repellency, a copolymer having polyfluoroalkyl groups has been known. With respect to a non-aqueous solvent, for example, use of a fluoropolymer having constitutional units derived from a fluoroacrylate and hydrophilic groups for a porous base material has been proposed (Patent Document 2).

Further, an aqueous coating agent as a permeable water absorption-inhibiting agent for architectural/civil engineering use, having a fluorinated aqueous emulsion water repellent added to the above-described aqueous alkyl alkoxysilane composition has been proposed (Patent Document 3). In the coating agent, the water repellent may be a zirconium aqueous emulsion water repellent, and commercially available products may be exemplified as the fluorinated aqueous emulsion water repellent. However, for the aqueous coating agent proposed in the document, heating is essentially required, and water repellency will not be practically obtained unless a heat treatment step at 100°C or above is carried out after coating, and water repellency is insufficient by drying at room temperature. Further, it is unclear weather or not the aqueous coating agent disclosed in the document has oil repellency.

In another proposal of an aqueous dispersion containing an organic silicon compound and a fluorinated resin aqueous dispersion (Patent Document 4), specifically, an aqueous dispersion of a fluorinated resin comprising a fluoroolefin type fluororesin such as vinylidene fluoride (VdF) as the base is used. The document also discloses, as the fluorinated resin, a seed polymer of the above fluororesin as the base and a common acrylic resin. Further, a masonry aqueous treating agent containing a fluorinated phosphate is also disclosed (Patent Document 5). This document discloses an embodiment of the treating agent containing a surface modifier (hydroxyl group-containing compound, silicone compound) as an essential component and an organic silicon compound and the same fluororesin as disclosed in Patent Document 4 as essential components. However, such an aqueous dispersion is insufficient in durability of effects and weather resistance since permeation through the base material occurs only on the outermost layer.
Patent Document 1: JP-A-62-197369
Patent Document 2: JP-A-2004-115691
Patent Document 3: JP-A-06-172677
Patent Document 4: WO98/23680
Patent Document 5: JP-A-2003-306391

### DISCLOSURE OF THE INVENTION

### OBJECT TO BE ACCOMPLISHED BY THE INVENTION

The object of the present invention is to provide a stable aqueous surface treating agent which can impart excellent water and oil repellency (water proofness and oil proofness), antifouling properties and weather resistance, and durability thereof to structures made of architectural/civil engineering materials such as stones and concrete, particularly porous materials.

### MEANS TO ACCOMPLISH THE OBJECT

The above object can be accomplished by the following present invention.

The present invention provides an aqueous surface treating agent for architectural/civil engineering structures, comprising at least one fluoropolymer (A) selected from a polyfluoroalkyl group-containing poly(meth)acrylate (A1) and a polyfluoroalkyl group-containing polyurethane (A2) in an aqueous medium.

The polyfluoroalkyl group preferably has from 4 to 20 carbon atoms.

The aqueous surface treating agent of the present invention is preferably an emulsion of the fluoropolymer (A).

The aqueous surface treating agent of the present invention usually further contains a surfactant (B).

In a preferred embodiment of the present invention, the above (A1) is a copolymer of a polyfluoroalkyl group-containing (meth)acrylate and a non-fluorinated polymerizable compound.

As examples of the preferred (A1), a two-stage copolymer of a first component comprising homopolymerized units or copolymerized units of a polyfluoroalkyl group-containing (meth)acrylate or copolymerized units with a non-fluorinated polymerizable compound, and a second component comprising polyfluoroalkyl group-containing (meth)acrylate/non-fluorinated polymerizable compound copolymerized units (provided that the polymerized units of the non-fluorinated polymerizable compound as the first component are different from the polymerized units of the non-fluorinated polymerizable compound as the second component) may be mentioned.

In the two-stage copolymer, the above (A1) is preferably polymer particles in a state where the second component is present on the surface or in the interior of the particles comprising the first component.

The aqueous surface treating agent of the present invention may further contain a silicone (C).

The aqueous surface treating agent of the present invention may further contain (D) a silane compound having a hydrolyzable group and/or a partially hydrolyzed condensate of a silane compound having a hydrolyzable group.

A surface treating method, which comprises applying the aqueous surface treating agent of the present invention to the surface of an architectural/civil engineering structure to form a coating film is also provided.

Further, the present invention provides an architectural/civil engineering structure treated by the above method.

The above architectural/civil engineering structure is preferably made of a porous base material.

### EFFECTS OF THE INVENTION

The aqueous surface treating agent of the present invention is a treating agent excellent in storage stability, which can impart excellent water proofness, antifouling properties and weather resistance and durability thereof to architectural/civil engineering structures.

### BEST MODE FOR CARRYING OUT THE INVENTION

The aqueous surface treating agent of the present invention contains at least one fluoropolymer (A) selected from a polyfluoroalkyl group-containing poly(meth)acrylate (A1) and a polyfluoroalkyl group-containing polyurethane (A2) in an aqueous medium. The aqueous surface treating agent is preferably an emulsion of the fluoropolymer (A). In the present invention, the term "polymer" means a compound having repeating units by polymerization and includes an oligomer.

In the present invention, the polyfluoroalkyl group (hereinafter sometimes referred to as R^{f} group) contained in the fluoropolymer (A) means a group having two or more hydrogen atoms in an alkyl group substituted by fluorine atoms. In the present invention, the alkyl group in the R^{f} group includes an oxaalkyl group having an ether bond inserted between the carbon-carbon bond.

Further, the R^{f} group may have another halogen atom in addition to fluorine atoms. Such another halogen atom is preferably a chlorine atom. The ratio of the fluorine atoms in the R^{f} group, as represented by {(the number of fluorine atoms in the R^{f} group)/(the number of hydrogen atoms in a corresponding alkyl group having the same number of carbon atoms as the R^{f} group)}×100 (%) is preferably at least 60%, particularly preferably at least 80%. Further, the R^{f} group is preferably a group having all hydrogen atoms in an alkyl group substituted by fluorine atoms (i.e. perfluoroalkyl group).

The R^{f} group has preferably from 4 to 20, more preferably from 6 to 16 carbon atoms. Further, the R^{f} group may be linear or branched, preferably linear. In a case where it is branched, it is preferred that the branched moiety is present in the vicinity of the terminal of the R^{f} group and is a short chain having from about 1 to about 4 carbon atoms. In a case where the R^{f} group is an oxaalkyl group having an ether bond, it is assumed that a chain containing the etheric oxygen atom has a chain length and a structure corresponding to those of only carbon atoms.

As the R^{f} group, the following specific examples are mentioned, but it is not limited to such specific examples. The following examples include "structurally isomeric groups" which are groups having the same molecular formula but having different structures.

Perfluoroalkyl groups such as C₄F₉- [F(CF₂)₄-, (CF₃)₂CFCF₂-, (CF₃)₃C-], C₅F₁₁- [e.g. F(CF₂)₅-, (CF₃)₃CCF₂-], C₆F₁₃-, C₇F₁₅-, C₈F₁₇-, C₉F₁₉-, C₁₀F₂₁-, C₁₁F₂₃-, C₁₂F₂₅-, C₁₃F₂₇-, C₁₄F₂₉-, C₁₅F₃₁- and C₁₆F₃₃-; fluoroalkyl groups such as HCₜF₂ₜ- (wherein t is an integer of from 4 to 20) and Cl(CF₂)₈-; and oxafluoroalkyl groups such as F(CF₂)₃OCF(CF₃)-, F(CF₂)₂[CF₂OCF(CF₃)]₂-, F(CF₂)₂[CF₂OCF(CF₃)]₃-, F(CF₂)₃OCF(CF₃)O(CF₂)₂-, F(CF₂)₂[CF₂OCF(CF₃)]₂O(CF₂)₂-, F(CF₂)₅OCF(CF₃)-, F[CF(CF₃)CF₂O]ₓCF(CF₃) (CF₂)₂-, F[CF(CF₃)CF₂O]_{y}CF(CF₃)-, F[CF(CF₃)CF₂O]ᵤ-, F(CF₂CF₂CF₂O)ᵥ(CF₂) ₂- or F(CF₂CF₂O)_{w}(CF₂)₂-(wherein each of x and y is an integer of from 1 to 6, u is an integer of from 1 to 6, v is an integer of from 1 to 6, and w is an integer of from 1 to 9) may be mentioned.

In the present invention, the polyfluoroalkyl group-containing (meth)acrylate (hereinafter referred to as R^{f} (meth)acrylate) forming the polyfluoroalkyl group-containing poly(meth)acrylate (A1) is a compound in which an R^{f} group is present in the ester residue of the (meth)acrylate. Further, an acrylate and a methacrylate will generically be referred to as a (meth)acrylate.

The R^{f} (meth)acrylate is preferably a compound represented by the following Formula 1:

R^{f}-Q¹-OCOCR³=CH₂ Formula 1

wherein Q¹ is a bivalent organic group, R³ is a hydrogen atom or a methyl group, and R^{f} is the same as the above R^{f} group. Specifically, Q¹ may, for example, be (CH₂)ₙ₊ₚ-, -(CH₂)ₙCOONH(CH₂)ₚ-, -(CH₂)ₙCONH(CH₂)ₚ-, -(CH₂)ₙSO₂NH(CH₂)ₚ- or -(CH₂)ₙNHCONH(CH₂)ₚ- (wherein each of n and p is 0 or an integer of at least 1, and n+p is an integer of from 2 to 22). Q¹ is preferably - (CH₂)ₙ₊ₚ-, -(CH₂)ₙCONH(CH₂)ₚ- or - (CH₂)ₙSO₂NH(CH₂)ₚ- (wherein p is an integer of at least 2, and n+p is an integer of from 2 to 6), particularly preferably -(CH₂)ₙ₊ₚ- wherein n+p is from 2 to 6, i.e. a dimethylene group to a hexamethylene group.

The R^{f} (meth)acrylate represented by the above formula 1 may, for example, be CF₃(CF₂)₇(CH₂)₂OCOCR³=CH₂, CF₃(CF₂)₇(CH₂)₃OCOCR³=CH₂, CF₃(CF₂)₉(CH₂)₂OCOCR³=CH₂, (CF₃)₂CF(CF₂)₆(CH₂)₂OCOCR³=CH₂, F(CF₂)ₘ(CH₂)₂OCOCH=CH₂ (mixture of m=6 to 16), CF₂Cl(CF₂)₉(CH₂)₃OCOCR³=CH₂, HCF₂(CF₂)₉(CH₂)₂OCOCR³=CH₂, CF₃(CF₂)₉(CH₂)₁₁OCOCR³=CH₂, CF₃(CF₂)₉CONH(CH₂)₅OCOCR³=CH₂, CF₃(CF₂)₇SO₂N(C₃H₇)C₂H₄OCOCR³=CH₂, CF₃(CFZ)₉O(CH₂)₂(CH₂)₂OCOCR³=CH₂, CF₃(CF₂)₉CH₂OCOCR³=CH₂, CF₃(CF₂)₉(CH₂)₃OCOCR³=CH₂, CF₃(CF₂)₇CH₂CF₂(CH₂)₂OCOCR³=CH₂, CF₃(CF₂)₇(CH₂)₄OCOCR³=CH₂, CF₃(CF₂)₁₃(CH₂)₆OCOCR³=CH₂ or CF₃(CF₂)₇(CH₂)₂OCH₂-Ph- (CH₂)₂OCOCR³=CH₂ (wherein Ph is a phenyl group).

The content of the R^{f} (meth)acrylate units in the R^{f} group-containing poly(meth)acrylate (A1) in the present invention is preferably from about 5 to about 100 mass%, more preferably from 20 to 100 mass%, especially preferably from 40 to 100 mass%, whereby excellent water repellency is obtained. Specifically, the R^{f} group-containing poly(meth)acrylate (A1) may be a homopolymer of an R^{f} (meth)acrylate or may be a copolymer of two or more R^{f} (meth)acrylates. In a case where the R^{f} group-containing poly(meth)acrylate (A1) contains two or more types of R^{f} (meth)acrylate units, it preferably contains units of R^{f} (meth)acrylates differing in the number of carbon atoms in the R^{f} group. Further, the R^{f} group-containing poly(meth)acrylate (A1) may be a copolymer of the R^{f} (meth)acrylate with another polymerizable compound.

Among them, the R^{f} group-containing poly(meth)acrylate (A1) is preferably a copolymer containing units derived from a non-fluorinated polymerizable compound as the above another polymerizable compound. It may contain only one type or two or more types of the non-fluorinated polymerizable compound units. The non-fluorinated polymerizable compound is a polymerizable compound containing no fluorine atoms.

The non-fluorinated polymerizable compound may or may not have a reactive group other than the polymerizable group.

The non-fluorinated polymerizable compound having a reactive group may, for example, be a hydroxyl group-containing (meth)acrylate such as 3-chloro-2-hydroxypropyl (meth)acrylate, 2-hydroxyethyl (meth)acrylate, 2-hydroxypropyl (meth)acrylate, diethylene glycol mono(meth)acrylate, polypropylene glycol mono(meth)acrylate, poly(oxyethylene/oxypropylene) glycol mono(meth)acrylate, glycerol mono(meth)acrylate or trimethylolpropane mono(meth)acrylate; an amide such as (meth)acrylamide, N-methylol(meth)acrylamide, diacetone (meth)acrylamide, N,N-dimethyl(meth)acrylamide, N,N-diethyl(meth)acrylamide, N,N-diisopropyl(meth)acrylamide or N-butoxymethyl(meth)acrylamide; γ-trimethoxysilylpropyl (meth)acrylate, glycidyl (meth)acrylate, aziridinyl (meth)acrylate or a blocked isocyanate group-containing (meth)acrylate.

Among them, the blocked isocyanate group-containing (meth)acrylate is preferably a blocked product of a reaction product obtained by reacting a hydroxyl group-containing (meth)acrylate with a polyisocyanate in such a ratio that at least one isocyanate group will remain, or a reaction product of a hydroxyl group-containing (meth)acrylate with a polyisocyanate derivative having at least one blocked isocyanate group and at least one (non-blocked) isocyanate group.

The hydroxyl group-containing (meth)acrylate here is preferably the above-exemplified one. Further, the polyisocyanate may, for example, be the same compound as the polyisocyanate compound (a22) in the after-mentioned polyfluoroalkyl group-containing polyurethane (A2).

The blocking agent for the isocyanate group may, for example, be preferably an oxime, an alkylketoxime, a phenol, a β-diketone, a malonate, a lactam or an alkanol. Specifically, it may, for example, be cyclohexanone oxime, methyl ethyl ketoxime, phenol, cresol, acetyl acetone, diethyl malonate, isopropanol, t-butanol, ε-caprolactam, imide maleate or sodium bisulfite, and it is preferably cyclohexanone oxime or methyl ethyl ketoxime.

Further, the non-fluorinated polymerizable compound having no reactive group may, for example, be preferably a (meth)acrylate such as behenyl (meth)acrylate, octadecyl (meth)acrylate, stearyl (meth)acrylate, cetyl (meth)acrylate, dodecyl (meth)acrylate, decyl (meth)acrylate, butyl (meth)acrylate, polyoxyalkylene (meth)acrylate, benzyl (meth)acrylate, cyclohexyl (meth)acrylate, 2-ethylhexyl (meth)acrylate, a (meth)acrylate having a polysiloxane group, cyclododecyl (meth)acrylate, isobornyl (meth)acrylate, phenyl (meth)acrylate, benzyl (meth)acrylate, adamantyl (meth)acrylate, tolyl (meth)acrylate, 3,3-dimethylbutyl (meth)acrylate, 3,3-dimethyl-2-butyl (meth)acrylate or dicyclopentyl (meth)acrylate, or vinyl chloride.

The copolymer containing the above-described non-fluorinated polymerizable compound units as the copolymerized units with the R^{f} (meth)acrylate may be a random copolymer or a multistage copolymer. A preferred copolymer may, for example, be a two-stage copolymer of a first component containing R^{f} (meth)acrylate polymerized units and a second component comprising non-fluorinated polymerizable compound polymerized units.

The first component may be a homopolymer or a copolymer of the R^{f} (meth)acrylate. As one example of such a copolymer, a copolymer of two or more R^{f} (meth)acrylates may be mentioned, and in such a case, preferred is a copolymer of compounds differing in the number of carbon atoms in the R^{f} group in the R^{f} (meth)acrylate. Further, the copolymer may be a copolymer containing polymerized units of a non-fluorinated polymerizable compound as the copolymerized units. The copolymerized units may comprise only one type or two or more types of non-fluorinated polymerizable compounds. The first component preferably contains the R^{f} (meth)acrylate units in a ratio of usually from about 50 to about 100 mass%, preferably from 55 to 100 mass%, especially from 60 to 100 mass%, whereby the R^{f} group-containing poly(meth)acrylate (A1) to be finally obtained has excellent water repellency.

The second component comprises copolymerized units of the R^{f} (meth)acrylate and the non-fluorinated polymerizable compound, and may contain units of two or more types of R^{f} (meth)acrylates and/or non-fluorinated polymerizable compound independently. The R^{f} (meth)acrylate may be the same as or different from the R^{f} (meth)acrylate forming the first component among the above examples. On the other hand, the non-fluorinated polymerizable compound forming the second component is preferably a compound different from the non-fluorinated polymerizable compound forming the first component among the above examples.

The content of the R^{f} (meth)acrylate in the second component is preferably from 0.1 to 90 mass%, more preferably from 10 to 50 mass%.

In the present invention, the molecular weight of the R^{f} group-containing poly(meth)acrylate (A1) is preferably from 1,000 to 100,000, more preferably from 5,000 to 50,000.

In a case where the R^{f} group-containing poly(meth)acrylate (A1) is the above-described two-stage copolymer, the molecular weight of the first component is preferably from 1,000 to 100,000, more preferably from 5,000 to 50,000. When the molecular weight of the first component is within the above range, the surface treating agent of the present invention has high water repellency when dried at room temperature. The molecular weight of the second component is preferably from 1,000 to 100,000, particularly preferably from 5,000 to 100,000. The molecular weight of the second component may be judged from polymerization of only the second component or may be determined by subtracting the molecular weight of the polymer measured after the first stage polymerization from the molecular weight of the polymer measured after completion of the second stage polymerization. The molecular weight means the weight average molecular weight, and the same applies hereinafter.

In the present invention, the R^{f} group-containing poly(meth)acrylate (A1) is preferably obtained in the form of an emulsion by emulsion polymerization or dispersion polymerization of the above-described polymerizable compound containing at least R^{f} (meth)acrylate. Specifically, a method may be mentioned wherein the above polymerizable compound is subjected to polymerization with a polymerization initiator in the presence of an emulsifier and a polymer solvent. As the emulsifier, at least one of known nonionic, cationic, anionic and amphoteric surfactants known as an emulsifier may be employed. Such an emulsifier (surfactant) may properly be selected from ones disclosed hereinafter as the component (B) in the aqueous surface treating agent. It is preferably a (polyoxyalkylene)alkylamine, a (polyoxyalkylene)alkenylamine, a polyoxyethylene alkyl phenyl ether, a N-substituted diamine, a polyoxyalkylene alkyl ether or the like. Especially in view of stability of the dispersion liquid, the HLB value (hydrophile lipophile balance value) is preferably from 5 to 20, more preferably from 8 to 18.

The amount of the emulsifier is preferably from 0.5 to 20 parts by mass per 100 parts by mass of the polymerizable compound, more preferably from 1 to 10 parts by mass in view of water repellency and dispersion stability.

The polymerization solvent is preferably an aqueous solvent. The aqueous solvent may contain an organic solvent. The organic solvent is preferably a water soluble organic solvent, particularly preferably e.g. a ketone or glycol type organic solvent. The ketone type organic solvent is preferably acetone, and the glycol type organic solvent is preferably diethylene glycol, dipropylene glycol, triethylene glycol or glycol, or a monomethyl ether, dimethyl ether, diethyl ether or the like thereof. Among them, preferred is a glycol type organic solvent with low inflammability.

The amount of water and the organic solvent is preferably at most 50 parts by mass, particularly preferably from 2 to 45 parts by mass in total per 100 parts by mass of the polymerizable compound.

The polymerization initiator is not particularly limited, and a general purpose initiator such as a peroxide initiator such as an organic peroxide, an azo initiator, a redox initiator or a persulfate may be used depending upon the polymerization temperature. Further, the polymerization may be initiated by ionization radiation such as γ rays or the like. Among them, a water soluble or an oil soluble polymerization initiator is preferred, and an azo compound or a salt of an azo compound is preferred. The polymerization temperature is not particularly limited, and is preferably from 20 to 80°C.

For the above polymerization reaction, for the purpose of controlling the molecular weight of the polymer to be formed, a chain transfer agent may be present in the polymerization reaction system. The chain transfer agent is preferably a mercaptan.

Further, prior to initiation of the above polymerization, a mixture of the polymerizable compound, water and the emulsifier may be treated by e.g. a homogenizer or a high pressure emulsifying machine for pre-dispersion.

The polymer prepared by the above polymerization is preferably present as particles in the polymer solvent.

The particle size of the fine particles is preferably from 0.01 to 1 µm when the R^{f} group-containing poly(meth)acrylate (A1) is obtained in one stage polymerization. When the particle size is at least 0.01 µm, the amount of the emulsifier required to obtain a stable dispersion liquid is appropriate, and excellent water and oil repellency will be obtained. On the other hand, when it is at most 1 µm, the fine polymer particles are less likely to sediment in the medium. The particle size is particularly preferably from 0.05 to 0.5 µm. The particle size can be measured by e.g. a dynamic light scattering apparatus or an electron microscope.

In the present invention, the R^{f} group-containing poly(meth)acrylate (A1) is, in the case of a two-stage copolymer, preferably polymer particles in a state where the second component is present on the surface or in the interior of particles comprising the first component. The polymer particles preferably have a core/shell particle structure wherein the polymer as the core is covered with another polymer to be the shell, particularly preferably have a particle structure wherein the polymer to be the core is the first component and the polymer to be the shell is the second component.

Further, in the polymer particles, it is preferred that the polymer to be the core and the polymer to be the shell are different in the fluorine content, and it is preferred that the fluorine content of the polymer to be the core is higher than the fluorine content of the polymer to be the shell. Specifically, it is preferred that the content of the R^{f} (meth)acrylate in the polymer to be the core is higher by at least 20 mass% than the content of the R^{f} (meth)acrylate in the polymer to be the shell.

As a method for producing the above polymer particles, a method may be mentioned wherein the polymerizable compound to form the second component is polymerized in the presence of a preliminarily formed first component. Such polymerization may be carried out, for example, in accordance with the method as disclosed in e.g. JP-A-7-278442. The disclosure regarding polymerization in the above publication is incorporated herein by reference. Further, it is also possible to employ a method (so-called seed emulsion polymerization method) wherein the polymerizable compound to form the second component is added all at once or dividedly to an emulsion or a dispersion in which the first component is present as fine particles, and polymerized.

In the above, the first component may be preliminarily formed in accordance with the polymerization method disclosed for preliminary preparation of the R^{f} group-containing poly(meth)acrylate (A1) in a single stage. Further, formation of the second component i.e. the second stage polymerization may be carried out by selecting proper polymerization conditions among the above single stage production conditions except that it is carried out in the presence of the particles comprising the first component. At the time of the second state polymerization, water and/or an organic solvent or the like may be added to the polymerization system. The organic solvent may be the same organic solvent as used for polymerization of the first component. By addition of water and/or the organic solvent, the final solid content concentration may be adjusted, or the polymer yield of the second component may be increased. The ratio of water to the organic solvent is not particularly limited. Further, in order to improve the final yield, it is preferred to well stir the mixture of the first component and the material for the second stage polymerization before the second stage polymerization is initiated.

The amount of the polymerization material for the second component is preferably such that the ratio of (the mass of the polymerization material for the second component)/(the mass of the first component) is from 0.05 to 10.

The polyfluoroalkyl group-containing polyurethane (hereinafter sometimes referred to as R^{f} group-containing polyurethane) (A2) used as the fluoropolymer (A) in the present invention is specifically a reaction product of a compound (a21) having one R^{f} group and at least one group containing active hydrogen capable of reacting with an isocyanate group, with a polyisocyanate compound (a22).

The group having active hydrogen in the compound (a21) may be any group so long as it is capable of reacting with an isocyanate group, and it is particularly preferably a hydroxyl group, an amino group, a carboxyl group or a mercapto group.

In the compound (a21), the R^{f} group and the group having active hydrogen are bonded directly or via a connecting group, preferably via a connecting group. Particularly preferably, one R^{f} group is bonded to a monovalent group having active hydrogen via a bivalent connecting group. Such a compound (a21) is shown by the Formula 2:

R^{f}-Q-E Formula 2

wherein R^{f} is the above R^{f} group, Q is a bivalent connecting group, and E is a monovalent group having active hydrogen. A carbon atom in R^{f}, which is bonded to Q, preferably has one or more fluorine atoms bonded thereto.

As Q in the Formula 2, the following may be exemplified, but Q is not limited thereto. -(C=O)-, -CONR⁴-, -SO₂NR⁴-, -SO₂NR⁴ (CH₂)ₙ-, -SO₂-, - (CH₂)ₙ-, -C₆H₄-, -C₆H₃Cl- or -OC₂H₄- (R⁴ is a hydrogen atom or a C₁₋₆ lower alkyl group, and n is an integer of from 1 to 20). Among them, -(CH₂)ₙ- or -SO₂NR⁴(CH₂)ₙ- is particularly preferred, and R⁴ is preferably a methyl group or an ethyl group.

E in the Formula 2 is preferably a hydroxyl group, an amino group or a carboxyl group, particularly preferably a hydroxyl group.

Specific examples of the compound represented by the formula 2 are shown below, but it is not limited thereto. In the following formulae, R^{f} is the above polyfluoroalkyl group. R^{f}CH₂CH₂OH,
R^{f}SO₂N (CH₃) CH₂CH₂OH,
R^{f}CON (CH₃)CH₂CH₂OH,
R^{f}CH₂CH₂NH₂,
R^{f}SO₂N (CH₃) CH₂CH₂NH₂,
R^{f} CH₂CH₂COOH,
R^{f} SO₂N (CH₃) CH₂CH₂COOH.

The polyisocyanate compound (a22) is not particularly limited, and a known polyisocyanate having two or more isocyanate groups and its modified product may be employed. The modified product is preferably a nurate modified product, a trimethylol modified product or a biuret modified product. The isocyanate compound may, for example, be an aliphatic polyisocyanate, an alicyclic polyisocyanate or an aromatic polyisocyanate.

Examples of the polyisocyanate compound (a22) are shown below, but it is not limited thereto. Aliphatic polyisocyanates such as hexamethylene diisocyanate and lysine diisocyanate; aromatic polyisocyanates such as xylylene diisocyanate (XDI), tolylene diisocyanate (TDI), phenylene diisocyanate and diphenylmethane diisocyanate (MDI); alicyclic polyisocyanates such as isophorone diisocyanate, cyclohexylene diisocyanate, hydrogenated MDI (4,4'-dicyclohexylmethane diisocyanate), trimethylhexamethylene diisocyanate and hydrogenated XDI (bis(isocyanatemethyl)cyclohexane); and their isocyanurate modified products, trimethylol addition products, trisbiuret products, etc. Trifunctional amine derivatives, etc.

Among them, preferred is an aliphatic polyisocyanate or an alicyclic polyisocyanate, from such a reason that the color is less likely to change after treatment, or the like. Specifically, preferred is hexamethylene diisocyanate, isophorone diisocyanate, hydrogenated MDI, or its nurate modified product, trimethylol addition product or biuret modified product.

The R^{f} group-containing polyurethane (A2) is preferably, among them, a reaction product of the compound (a21) having one R^{f} group and one hydroxyl group with the polyisocyanate compound (a22).

Further, a reaction product of such a compound (a21), the polyisocyanate compound (a22) and another compound (a23) different from the compound (a21) and having a group containing active hydrogen is also preferred. Such another compound (a23) is preferably a compound containing no R^{f} group.

The group containing active hydrogen in another compound (a23) is preferably a compound having a hydroxyl group, an amino group or a carboxyl group.

Among such compounds (a23), the compound having a hydroxyl group is preferably a compound represented by the formula R⁵OH (wherein R⁵ is a C₁₋₂₂ alkyl group, a glycidyl group, an aziridyl group, or a halogenated alkyl group), a monovalent alcohol having an ether bond such as ethylene glycol monoalkyl ether, polyethylene glycol monomethyl ether, polyethylene glycol monoethyl ether or polypropylene glycol monoalkyl ether, ethylene glycol, 2,3-epoxy-1-propanol or the like.

Among the compounds (a23), the compound having a carboxyl group may, for example, be a compound represented by the formula R⁶COOH (wherein R⁶ is a C₁₋₂₂ alkyl group), succinic acid, chlorendic acid or adipic acid, and it is particularly preferably stearic acid or succinic acid.

Further, among the compounds (a23), the compound having an amino group is preferably an alkylamine, particularly preferably butylamine, dibutylamine, stearylamine, ethylenediamine or the like. Further, a hydroxyalkylamine or the like is also included, and it may, for example, be hydroxyethylamine.

When the above compound (a23) is used, it is preferred to use the compound (a23) in a ratio of from 0.1 to 30 parts by mass per 100 parts by mass of the total amount of the compound (a21) and the compound (a23).

As a method for preparing the R^{f} group-containing polyurethane (A2), in a usual case, a method of heating the compound (a21) and the polyisocyanate compound (a22) in the presence of a solvent may be mentioned.

Further, in a case where the compound (a23) is included in the reaction materials for the reaction product (A2), any of (i) a method of reacting the compound (a23) with the polyisocyanate compound (a22) in a large excess amount and reacting unreacted isocyanate groups with the compound (a21), (ii) a method of reacting the compound (a21) with the polyisocyanate compound (a22) in a large excess amount and reacting unreacted isocyanate groups with the compound (a23), and (iii) a method of reacting a mixture of the compound (a21) and the compound (a23) with the polyisocyanate compound (a22), may be employed. In each method, one type or two or more types of the compounds (a21) may be reacted, and in a case where two or more types are reacted, such two types are preferably a mixture of two or more types of compounds differing in the number of carbon atoms in the R^{f} group. Further, regarding the compound (a23) also, two or more types may be reacted.

With respect to the ratio of the amount of the compound (a21) to the polyisocyanate compound (a22) in the above reaction, in a usual case, it is preferred to use the compound (a21) in an amount of from 30 to 90 equivalent amount, more preferably from 50 to 80 equivalent amount per 100 equivalent amount of the polyisocyanate compound (a22).

Further, in a case where the compound (a23) is present in the reaction system, it is preferred to use the compound (a23) in such an amount that all isocyanate groups in the polyisocyanate compound (a22) are reacted by the reaction with the compound (a21) and the compound (a23), or more. The R^{f} group-containing polyurethane (A2) preferably contains no unreacted isocyanate groups.

The reaction temperature in the above reaction is preferably from 60 to 110°C, and preferably from 60 to 90°C when a compound having a hydroxyl group or an amino group is used as the active hydrogen-containing group, and is preferably from 90 to 110°C when a compound having a carboxyl group is used as the active hydrogen-containing group.

Further, the solvent is preferably methyl ethyl ketone, methyl isobutyl ketone, diethyl succinate, butyl acetate or the like. For the reaction, a catalyst may be present. The catalyst is preferably a catalyst containing tin or copper, and particularly preferably dibutyltin dilaurate in view of availability. The amount of the catalyst is usually preferably from 0.01 to 0.1 equivalent amount per 1 equivalent amount of isocyanate groups. The reaction time is preferably from about 4 to about 8 hours. Such reaction conditions are the same regardless of the presence or absence of the compound (a23).

The molecular weight of the R^{f} group-containing polyurethane (A2) is preferably from about 500 to about 5,000, more preferably from about 1,000 to about 3,000.

The R^{f} group-containing polyurethane (A2) is preferably in the form of an emulsified product, whereby it is easily miscible with other components. For preparation of the emulsified product, any method may be employed so long as a stable emulsified product is obtained. For example, in a case where a solvent which is unnecessary for or which adversely affects the present composition is contained in the product obtained by the above reaction, the contained solvent is distilled off under reduced pressure and then the product is emulsified in the presence of water and an emulsifier. Otherwise, water and an emulsifier are added to the product for emulsification, and then the solvent is distilled off under reduced pressure. Needless to say, emulsification and removal of the solvent may be conducted concurrently. The emulsification method is preferably forced emulsification by a homogenizer in view of stability of the emulsified product, but it is not limited to this method. Further, it is more preferred to use a high pressure emulsification method by itself or in combination with another emulsification method for the purpose of improving stability of the emulsified product.

The emulsifier is not particularly limited, and any of known nonionic, cationic, anionic and amphoteric surfactants known as an emulsifier may be employed. Specifically, the surfactant mentioned hereinafter as the component (B) in the aqueous surface active agent may be mentioned. As the emulsifier, specific one or two or more in combination among them may be used. It is particularly preferably a (polyoxyalkylene)alkylamine, a (polyoxyalkylene)alkenylamine, a polyoxyethylene alkyl phenyl ether, a N-substituted diamine, a polyoxyethylene alkyl ether or the like. Especially in view of stability of the dispersion liquid, the HLB value is preferably from 5 to 20, more preferably from 8 to 18.

As the amount of use of the emulsifier, it is preferred to use the emulsifier in an amount of from 0.1 to 30 mass%, more preferably from 1 to 20 mass% based on the mass of the R^{f} group-containing polyurethane (A2).

The R^{f} group-containing polyurethane (A2) may contain a water soluble organic solvent. The water soluble organic solvent contributes to only the stability of the R^{f} group-containing polyurethane (A2) but also improvement of stability of the aqueous surface treating agent of the present invention. The organic solvent is particularly preferably e.g. a ketone type or ether type organic solvent, similar to the polymerization solvent for the R^{f} group-containing poly(meth)acrylate (A1). The ketone type organic solvent is preferably acetone, and the glycol type organic solvent is preferably diethylene glycol, dipropylene glycol, triethylene glycol or glycol, or a monomethyl ether, dimethyl ether, diethyl ether or the like thereof.

Especially preferred is an ether type organic solvent in view of low inflammability.

The ratio of water to the organic solvent is not particularly limited. The organic solvent may be added at any stage to obtain the R^{f} group-containing polyurethane (A2), and it is preferably added together with the emulsifier at the time of emulsification in view of effects of improving workability and stability.

The aqueous surface treating agent of the present invention comprises at least one fluoropolymer (A) selected from the above R^{f} group-containing poly(meth)acrylate (A1) and R^{f} group-containing polyurethane (A2) in an aqueous medium. The aqueous medium forming the aqueous surface treating agent is preferably water or water containing a water soluble organic solvent. The water soluble organic solvent may be preferably a ketone, an ester, a glycol or a glycol ether. In a case where the aqueous medium comprises water and the water soluble organic solvent, the ratio of water in the aqueous medium is preferably at least 50 mass%, more preferably at least 60 mass%. Further, the ratio of the water soluble organic solvent is preferably from 5 to 50 parts by mass, more preferably from 5 to 20 parts by mass per 100 parts by mass of water.

The water soluble organic solvent is preferably one having a boiling point of from 40 to 200°C in view of drying properties, and is preferably one having solubility in water at 20°C of at least 1 mass%.

The aqueous medium is a volatile component, but it preferably remains in the final aqueous surface treating agent in an amount of from 50 to 99 mass%. When it is at least 50 mass%, the amount of permeation of other components through the base material will be sufficient, whereby the performance can be exhibited, and when it is at most 99 mass%, it is economically efficient, and construction operation will not be impaired.

Further, the concentration of the fluoropolymer (A) in the aqueous surface treating agent is adjusted to be preferably from 1 to 40 mass%, particularly preferably from 2 to 20 mass%.

The aqueous surface treating agent of the present invention is essentially a composition having the fluoropolymer (A) dissolved or dispersed in the aqueous medium, and it is preferably in the form of an emulsion. The emulsion usually contains a surfactant (B). As the surfactant (B), it is preferred to use one or more of nonionic, anionic, cationic and amphoteric surfactants.

The nonionic surfactant may, for example, be a polyoxyalkylene alkyl ether such as polyoxyethylene alkylphenyl ether or polyoxyethylene alkyl ether.

The following examples may be mentioned as the polyoxyethylene alkylphenyl ether. In the following, Ph is a 1,4-phenylene group.

Polyoxyethylene nonylphenyl ether: C₉H₁₉-Ph-O(CH₂CH₂O)ₙH (wherein n is an integer of at least 1), C₈H₁₇-Ph-O(CH₂CH₂O)ₙH (wherein n is an integer of at least 1).

The following specific examples may be mentioned as the polyoxyethylene alkyl ether.

Polyoxyethylene lauryl ether: C₁₂H₂₅O(CH₂CH₂O)ₘH (wherein m is an integer of at least 1), C₁₂H₂₅O(CH₂CH₂O)ₘ[CH₂CH(CH₃)CH₂O]ₙH (wherein each of m and n is an integer of at least 1).

Further, it is also possible to use a nonionic surfactant available as a commercial product such as EMULGEN 106, 108, 120, 210, 306P, 408, 420, 430, 909, 910, 920, 930 (manufactured by Kao Corporation) or Noigen XL50, 60, 70, 80, 100, TDS80, 100 or 120 (manufactured by DAI-ICHI KOGYO SEIYAKU CO., LTD.).

The cationic surfactant may, for example, be a quaternary ammonium salt such as alkyltrimethylammonium chloride or an alkylamine. Further, it is also possible to use a cationic surfactant available as a commercial product such as FARMIN (manufactured by DAI-ICHI KOGYO SEIYAKU CO., LTD.).

The anionic surfactant may, for example, be a (polyoxyalkylene)alkylamine, a (polyoxyalkylene)alkenylamine or a N-substituted diamine.

Further, an alkyl oleyl sulfonate, an alkylbenzene sulfonate or a salt thereof, an alkyl sulfate, a salt of an alkyl sulfuric ether or the like may also be mentioned.

As the (polyoxyalkylene)alkylamine or the (polyoxyalkylene)alkenylamine, the following examples may be mentioned. N,N-bis(polyoxyethylene)octadecylamine, N,N-bis(polyoxyethylene)oleylamine, N,N-bis(polyoxyethylene)hexadecylamine, N,N-bis(polyoxyethylene)decylamine, N,N-bis(polyoxyethylene)dodecylamine, N,N-bis(polyoxyethylene)tridecylamine, N,N-bis(polyoxyethylene)tetradecylamine and N,N-bis(polyoxyethylene polyoxypropylene)octadecylamine.

As the N-substituted diamine, N,N,N'-tris(polyoxyethylene)-N'-octadecyl-trimethylenediamine may be exemplified.

As the amphoteric surfactant, a betaine amphoteric surfactant may be exemplified.

Among them, especially preferred is a (polyoxyalkylene)alkylamine, a (polyoxyalkylene)alkenylamine, a polyoxyethylene alkylphenyl ether or a N-substituted diamine.

The above surfactant has an HLB value of preferably from 5 to 20, more preferably from 8 to 18, in view of stability of the dispersion liquid.

The ratio of the surfactant (B) in the aqueous surface treating agent is preferably from 0.01 to 5 mass%, more preferably from 0.05 to 2 mass%. This amount includes the amount of the surfactant used for preparation of the fluoropolymer (A).

The aqueous surface treating agent of the present invention preferably contains another component as the case requires, in addition to the above fluoropolymer (A) and surfactant (B). It preferably contains, as another component, for example, a silicone (C) which is a polymer containing units derived from a silicon compound represented by the Formula 3:

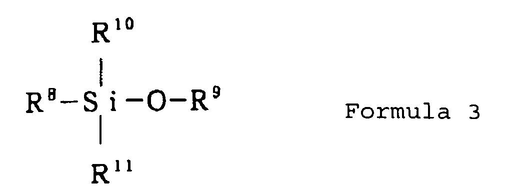

In the formula, R⁹ is a C₁₋₂₀ alkyl group, and the number of carbon atoms is preferably within a range of from 1 to 12 in view of the effect and permeation properties. R⁸, R¹⁰ and R¹¹ may be the same or different, and each of them is a C₁₋₅ alkoxy group, a hydroxyl group, a carboxyl group or a halogen atom, preferably an alkoxy group, and its number of carbon atoms is more preferably from 2 to 3 in view of the reaction rate and the reaction product.

The silicone (C) may be a homopolymer of the compound of the Formula 3 or may be a copolymer of two or more different compounds of the Formula 3. The degree of polymerization of the silicone (C) is not particularly limited. The silicone (C) may be obtained by polymerization using a component other than the compound of the Formula 3.

Further, in the present invention, the aqueous surface treating agent preferably contains a silane compound having a hydrolyzable group and/or a partially hydrolyzed condensate of a silane compound having a hydrolyzable group (hereinafter they will generically be referred to as a "silane compound") (D). The silane compound (D) is preferably a compound represented by the following Formula 4:

(R⁶)ₖSi(R⁷)₄₋ₖ Formula 4

wherein R⁶ is a monovalent hydrocarbon group, R⁷ is a monovalent hydrolyzable group, and k is an integer of from 1 to 3.

The monovalent hydrocarbon group R⁶ is preferably an alkyl group, cycloalkyl group, an aryl group or an aryl-substituted alkyl group. The alkyl group may be linear or branched. The alkyl group preferably has from 1 to 18 carbon atoms, and it is particularly preferably a methyl group, an ethyl group, a propyl group, a butyl group, a hexyl group, an octyl group, a 2-ethylhexyl group, a decyl group or a tetradecyl group. The cycloalkyl group is preferably a cyclohexyl group. The aryl group is preferably a phenyl group. The aryl-substituted alkyl group is preferably an alkyl group substituted by a phenyl group, particularly preferably a benzyl group. R⁶ is preferably an alkyl group in view of excellent hydrophobicity.

The hydrolyzable group R⁷ may, for example, be an alkoxy group, a hydroxyl group, a halogen atom, an acyloxy group or an isocyanate group. The alkoxy group is preferably a methoxy group, an ethoxy group or a propoxy group, the halogen atom is preferably a chlorine atom, and the acyloxy group is preferably an acetoxy group. R⁷ is particularly preferably an alkoxy group in view of storage stability and handling efficiency of the silane compound, especially preferably a methoxy group or an ethoxy group. In a case where two or more R⁶'s or R⁷'s are present in the Formula 4, they may be the same or different, respectively.

As the compound represented by the Formula 4, the following compounds may be mentioned. Methyltrimethoxysilane, methyltriethoxysilane, ethyltrimethoxysilane, ethyltriethoxysilane, dimethoxydiethoxysilane, dimethyldiethoxysilane, ethyltri(n-propoxy)silane, butyltrimethoxysilane, butyltriethoxysilane, dibutyldimethoxysilane, isobutyltrimethoxysilane, isobutyltriethoxysilane, cyclohexyltrimethoxysilane, cyclohexyltriethoxysilane, benzyltrimethoxysilane, phenyltrimethoxysilane, octyltrimethoxysilane, octyltriethoxysilane, octyltriisopropoxysilane, (2-ethylhexyl)trimethoxysilane, decyltrimethoxysilane, dodecyltriethoxysilane, didodecyldimethoxysilane, didodecyldiethoxysilane, cetyltrimethoxysilane, cetyltriethoxysilane, stearyltrimethoxysilane, stearyltriethoxysilane, etc.

Further, the partially hydrolyzed condensate of a silane compound is a n-mer having n molecules of the above silane compound partially hydrolytically condensed by the hydrolyzable groups, and it may be a dimer, a trimer or an oligomer wherein n is 3 or more, and it is preferably a 1.5 mer to trimer.

The silane compound (D) in the aqueous surface treating agent is preferably dissolved, dispersed or emulsified, particularly preferably dispersed. The silane compound (D) can be dispersed or emulsified by using the above-described surfactant as an emulsifier. The silane compound (D) may be preliminarily emulsified before formulated into the aqueous surface treating agent.

As a method for dispersing or emulsifying the component D, any method may be employed so long as a stable emulsified product is obtained, and a forced emulsification method by a homogenizer is particularly preferred.

The above silane compound (D) is preferably used in combination with the above silicone (C). Especially when these components (C) and (D) are incorporated in the aqueous surface treating agent, it is preferred to preliminarily prepare a mixed liquid thereof and then mixing it with an aqueous solution or dispersion liquid of the fluoropolymer (A). The silicone (C) and the silane compound (D) are preferably preliminarily formed into an emulsified product before they are formulated into a composition. The emulsifier is not particularly limited so long as a stable emulsion of the final composition is obtained. Specifically, a nonionic surfactant or a cationic surfactant may be used.

As the emulsification method, a method by a pipeline mixer, a homomixer, a colloid mill, a homogenize or ultrasonic emulsification may be mentioned. A method by a homogenizer is particularly preferred. The amount of use of the emulsifier is preferably from 0.5 to 30 mass% based on the silicone (C) or the silane compound (D). In the aqueous surface treating agent of the present invention, the amounts of the components (C) and (D) are optional within a range where the obtained performance is satisfactory.

The aqueous surface treating agent of the present invention may further contain another component as the case requires. Such another component may be various additives depending upon the purpose of use. For example, a mildewproofinhg agent, a fungicide, a flatting agent, a leveling agent, an antifoaming agent, a lubricant, a reodorant, a thickener, a pigment dispersant, an anti-sagging agent and anti-settling agent may, for example, be mentioned.

The above aqueous surface treating agent of the present invention is useful as a surface treating agent for various architectural/civil engineering structures. As the base material of the structure, stones, cement materials, plaster materials, wood materials or ceramic materials may be mentioned. Specifically, it is particularly useful as a surface treating agent for porous base materials such as natural stones, synthetic stones, hardened concrete, exposed concrete, cement mortar, cement blocks, cement secondary products, plasterboards, wood, wood materials, bricks and unglazed tiles. On the surface of the base material of the structure treated with the aqueous surface treating agent of the present invention, a coating film is formed by the hardened composition, whereby excellent water resistance, water permeation inhibiting properties, water repellency and oil repellency can be imparted.

As a treating method with the aqueous surface treating agent, any method capable of attaching the aqueous surface treating agent to the surface of the base material may be employed. Specifically, a usual coating method is employed, and spray coating, roller coating, brush coating or the like is preferred, and particularly roller coating, brush coating or the like which is free from flying to the surroundings is preferred, from the viewpoint of environmental care. In the case of application to the concrete surface, the coating amount is preferably such that the amount of the fluoropolymer (A) is from 2 to 200 g per 1 m² of the surface area of the base material.

The surface of the base material treated with the aqueous surface treating agent of the present invention is preferably dried. The drying conditions are not particularly limited, and air drying is usually employed in the case of field construction. The drying conditions may vary depending upon the season and the weather, and the drying is preferably carried out usually at from 0 to 40°C under a humidity of from 10 to 90% for from 1 to 24 hours. Subfreezing conditions are unfavorable since the surface treating agent may be frozen. In the plant construction also, construction is possible basically by the same operation, and heat treatment may be applied in order to make the treated coating film be more uniform and tougher.

On the surface and in the interior of the base material after the aqueous surface treating agent is applied and dried, a coating film formed by drying the aqueous surface treating agent of the present invention is formed.

The coating film formed on the surface of the base material, which has excellent water repellency and water permeation inhibiting properties, can prevent deterioration of the base material. Simultaneously, the coating film also has oil repellency and thereby increase antifouling properties of the base material. Further, the coating film formed from the surface treating agent of the present invention can be transparent, whereby it can maintain the outer appearance of the base material itself.

The base material treated with the aqueous surface treating agent of the present invention may be a structure as it is or may be a part of a structure. The structure may, for example, be a floor, a pillar, a wall, a roof, or an architectural structure or ship comprising a combination thereof.

### EXAMPLES

Now, the present invention will be described in further detail with reference to Examples. However, the present invention is by no means restricted to the following Examples.

In the following Synthesis Examples, the average particle size of the polymer in the dispersion liquid was measured by dynamic light scattering method.

### SYNTHESIS EXAMPLE 1

### Synthesis of polyfluoroalkyl group-containing poly(meth)acrylate A1 (hereinafter referred to as fluoropolymer A1) by seed polymerization

### (First component)

3,013 g of perfluoroalkylethyl acrylate (F(CF₂)ₘ(CH₂)₂OCOCH=CH₂, a mixture of m=6, 8, 10, 12, 14 and 16, and the average m is 9) (hereinafter referred to as FA), 55.8 g of dodecyl mercaptan, 155 g of polyoxyethylene secondary alkyl ether, 15.5 g of alkyldimethylamine acetate and 5,032 g of water were charged in a homogenizer and pre-dispersed, and then treated by using a high pressure homogenizer (emulsifying machine manufactured by Manton Gaulin) at 400 kg/cm² to obtain an emulsion.

7,000 g of the emulsion was put in a 10 L stainless steel autoclave, and 39.8 g of azobisisobutylonitrile was added, followed by replacement with nitrogen. The temperature was raised to 60°C, and polymerization was conducted for 8 hours to obtain a dispersion liquid (solid content concentration: 38.8 mass%) of a homopolymer of FA having an average particle size of 0.13 µm (polymer yield: 97.0%). This dispersion liquid was evaporated to dryness and subjected to GPC measurement and as a result, the molecular weight of the first component (homopolymer of FA) was 17,000.

### (Second component)

5,000 g of the above dispersion liquid (solid content concentration: 38.8 mass%) of the first component, 349 g (60 parts by mass) of FA, 175 g (30 parts by mass) of cyclohexyl methacrylate and 58.2 g (10 parts by mass) of glycidyl methacrylate were charged in a 10 L stainless steel autoclave. 252 g of dipropylene glycol monomethyl ether was further added, and the total solid content was adjusted to 40 mass% with water.

The mixture was stirred, and 25.0 g of 2,2'-azobis(2-amidinopropane) dihydrochloride was added, followed by replacement with nitrogen, and polymerization was conducted at 60°C for 15 hours. After cooling, a dispersion liquid (solid content concentration: 39.2 mass%) of fluoropolymer A1 was taken out.

The dispersion liquid was diluted to a solid content concentration of 20 mass% with deionized water to prepare fluoropolymer A1 treating agent. As observed by a transmission electron microscope, the average particle size was 0.16 µm. The fluoropolymer A1 was present in the dispersion liquid as core/shell fine particles, and a part thereof was polymerized in the aqueous phase.

### SYNTHESIS EXAMPLE 2

### Synthesis of fluoropolymer A1

60 g of FA, 30 g of 2-ethylhexyl acrylate, 8 g of hydroxyethyl acrylate, 2 g of hydroxyethyl methacrylate/TDI/methyl ethyl ketoxime addition product, 4 g of polyoxyethylene nonylphenyl ether (HLB value: 18), 300 g of water and 1 g of an azo initiator (manufactured by Wako Pure Chemical Industries, Ltd., tradename: VA-044) were added to a 1L autoclave equipped with a stirring apparatus, followed by replacement with nitrogen. Then, the temperature was raised to 70°C with stirring and maintained for 5 hours, to obtain a milky white liquid having a copolymer having an average particle size of 0.15 µm dispersed in a solid content of 25 mass%. Then, the liquid was diluted with deionized water to a solid content concentration of 20 mass%.

### SYNTHESIS EXAMPLE 3

### Synthesis of fluoropolymer A1

60 g of FA, 8 g of dioctyl malate, 2 g of N-methylolacrylamide, 4 g of polyoxyethylene nonylphenyl ether (HLB value: 18), 100 g of acetone, 200 g of water and 1 g of an azo initiator (manufactured by Wako Pure Chemical Industries, Ltd., tradename: V-50) were added to a 1 L autoclave equipped with a stirring apparatus, followed by replacement with nitrogen. Then, 30 g of vinyl chloride was poured, and the temperature was raised to 60°C with stirring and maintained for 5 hours, to obtain a milky white liquid having a copolymer having an average particle size of 0.1 µm dispersed in a solid content of 24.8 mass%. Then, the liquid was diluted with deionized water to a solid content concentration of 20 mass%. From observation of the dispersion liquid by a transmission electron microscope and results of compositional analysis, the polymer was confirmed to be a copolymer with a high FA content portion and with a low FA content portion.

### SYNTHESIS EXAMPLE 4

### Synthesis of fluoropolymer A1

70 g of FA, 28 g of octadecyl acrylate, 2 g of N-methylolacrylamide, 4 g of polyoxyethylene nonylphenyl ether (HLB VALUE: 18), 1 g of N,N-polyoxyethylene stearylamine (HLB VALUE: 15), 100 g of acetone, 200 g of water and 1 g of an azo initiator (manufactured by Wako Pure Chemical Industries, Ltd., tradename: V-50) were added to a 1 L autoclave equipped with a stirring apparatus, followed by replacement with nitrogen. Then, the temperature was raised to 60°C with stirring and maintained for 5 hours, to obtain a milky white liquid having a copolymer having an average particle size of 0.15 µm dispersed in a solid content of 25 mass%. Then, the liquid was diluted with deionized water to a solid content concentration of 20 mass% to obtain a dispersion liquid. As a result of observation of the dispersion liquid by a transmission electron microscope, the polymer was confirmed to be a copolymer having a uniform composition.

### PREPARATION EXAMPLE 1

### Example for preparation of fluoropolymer A1-1

AsahiGuard E-SERIES AG-E060 (manufactured by Asahi Glass Company, Limited, active ingredient concentration: 20 mass%) which is an aqueous emulsion of a fluoroacrylate copolymer was used as it was.

### PREPARATION EXAMPLE 2

### Example for preparation of fluoropolymer A1-2

AsahiGuard E-SERIES AG-E061 (manufactured by Asahi Glass Company, Limited, active ingredient concentration: 20 mass%) which is an aqueous emulsion of a fluoroacrylate copolymer was used as it was.

### SYNTHESIS EXAMPLE 5

### Synthesis of polyfluoroalkyl group-containing polyurethane A2 (hereinafter referred to as fluoropolymer A2)

To a 2 L glass reactor equipped with a thermometer, a dropping funnel, a stirrer and a Dimroth condenser, 320 g of diethyl succinate and 400 g of hexamethylene diisocyanate trisbiuret (NCO%=23%) were put, followed by replacement with nitrogen. Then, the temperature was raised to 70°C, 0.1 g of dibutyltin dilaurate as a catalyst was added, and 74 g of stearyl alcohol, 31 g of 2,3-epoxy-1-propanol and 765 g of F(CF₂)ₘ(CH₂)₂OH (a mixture of m=6, 8, 10, 12, 14 and 16, the average m is 9) were added dropwise from the dropping funnel in this order over a period of 2 hours, 1 hour and 3 hours, respectively. Stirring was continued further for 30 minutes, and the reaction crude liquid was analyzed by infrared spectroscopy to confirm that absorption by isocyanate disappeared. To 100 g of the above obtained compound, 20 g of diethyl succinate, 190 g of water, 8 g of a nonionic emulsifier (manufactured by Kao Corporation, EMULGEN 920) and 2.4 g of a cationic emulsifier (manufactured by Kao Corporation, acetate of FARMIN DMC) were added and heated to 85°C. The mixture was stirred by a homomixer at 3,000 rpm for 5 minutes and then emulsified by a high pressure homogenizer to obtain an emulsion having an average particle size of 0.3 µm. Then, the emulsion was diluted with deionized water to a solid content concentration of 20 mass% to prepare fluoropolymer A2.

### SYNTHESIS EXAMPLE 6

### Synthesis of fluoropolymer A2

To a 2 L glass reactor equipped with a thermometer, a dropping funnel, a stirrer and a Dimroth condenser, 320 g of methyl isobutyl ketone (hereinafter referred to as MIBK) and 400 g of isophorone diisocyanate trimer (NCO%=19%) were put, followed by replacement with nitrogen. Then, the temperature was raised to 70°C, 0.1 g of dibutyltin dilaurate was added, and 16 g of methanol and 692 g of the same, F(CF₂)ₘ(CH₂)₂OH as used in Synthesis Example 5 were added dropwise from the dropping funnel in this order over a period of 2 hours and 3 hours, respectively. Stirring was continued further for 30 minutes, followed by analysis by infrared spectroscopy to confirm that absorption by isocyanate disappeared. Using the above obtained compound, emulsification was carried out in the same manner as in Synthesis Example 5, and after emulsification, MIBK was distilled off under reduced pressure at 65°C to obtain a stable emulsion having an average particle size of 0.2 µm containing no solvent.

### SYNTHESIS EXAMPLE 7

### Preparation of silicone emulsified product S1

0.25 part of a polyoxyalkylene branched decyl type surfactant (HLB value: 13.8) and 79.75 parts of distilled water were weighed in a beaker, and 20 parts of methyl alkoxysiloxane was gradually added with stirring at high rate by a homomixer. After the entire amount was added, the mixture was further stirred at high rate for 60 minutes, whereupon white emulsified product S1 having a pH of 6.7 was obtained. With respect to the obtained S1, stability with time was measured by the following method.

### SYNTHESIS EXAMPLE 8

### Preparation of silane compound emulsified product S2

0.25 part of a polyoxyalkylene branched decyl type surfactant (HLB value: 13.8) and 79.75 parts of distilled water were weighed in a beaker, and 20 parts of decyltrimethoxysilane was gradually added with stirring at high rate by a homomixer. After the entire amount of decyltrimethoxysilane was added, the mixture was further stirred at high rate for 60 minutes, whereupon white emulsified product S2 having a pH of 6.7 was obtained. With respect to the obtained S2, stability with time was measured by the following method.

### SYNTHESIS EXAMPLE 9

### Preparation of silane compound/silicone emulsified product S3

0.25 part of a polyoxyalkylene branched decyl type surfactant (HLB value: 13.8) and 79.75 parts of distilled water were weighed in a beaker, and 16 parts of decyltrimethoxysilane and 4 parts of methyl alkoxysiloxane were gradually added with stirring at high rate by a homomixer. After the entire amount was added, the mixture was further stirred at high rate for 60 minutes, whereupon white emulsified product having a pH of 6.7 was obtained. With respect to the obtained S3, stability with time was measured by the following method. Evaluation of Stability with Time

Each of the emulsified products S1, S2 and S3 obtained in Synthesis Examples 7 to 9 was put in a transparent glass container and left at rest at room temperature and observed with time. Evaluation standards were as follows. ○: No change observed, Δ: partial separation or suspension, sedimentation or the like of insoluble matters confirmed, and X: completely separation observed, or remarkable suspension or sedimentation of insoluble matters observed.

Further, an emulsified product which tended to undergo separation was stirred by Yamato Laboratory Stirrer LR-41 having an anchor stirring blade set, at a stirring scale of 3 (about 250 evolutions per minute) for 3 minutes to confirm whether the entire emulsified product became uniform again to judge whether or not re-dispersion is possible based on evaluation standards ○: the entire emulsified product became uniform by stirring, and ×: the emulsified product did not become uniform. The results are shown in Table 1.

**TABLE 1**

| | S1 | S2 | S3 |
|---|---|---|---|
| Emulsifier | 0.25 | 0.25 | 0.25 |
| Silane component | 20.0 | 16.0 | |
| Silicone component | | 4.0 | 20.0 |
| Water | 79.8 | 79.8 | 79.8 |
| Total | 100.0 | 100.0 | 100.0 |
| Outer appearance | White liquid | White liquid | White liquid |
| pH | 6.69 | 6.74 | 6.70 |
| Stability with time 24 Hours later | Δ | Δ⁺ | Δ⁺ |
| Re-dispersion | ○ | ○ | ○ |

### EXAMPLES 1 to 16

### Preparation of aqueous surface treating agent

Using each of the fluoropolymers obtained in Synthesis Examples and Preparation Examples, the aqueous surface treating agent having a composition as identified in Table 2 was prepared. Values of the respective components in Table 2 represent parts by mass.

In Examples 1 to 4, the fluoropolymer A1 obtained in Synthesis Example 1 was used.

In Examples 5 to 8, the fluoropolymer A2 obtained in Synthesis Example 5 was used.

In Examples 9 to 12, AG-E060 obtained in Preparation Example 1 was used.

In Examples 13 to 16, AG-E061 obtained in Preparation Example 2 was used.

For preparation, the respective components were charged in a beaker, and an anchor stirring blade was set to stir the mixture at 250 rpm for 30 minutes to obtain an aqueous surface treating agent.

### COMPARATIVE EXAMPLES 1 and 2

### Preparation of aqueous surface treating agent

An aqueous surface treating agent as identified in Table 2 was prepared in the same manner as in Example 1 except that no fluoropolymer was contained.

### (Stability of aqueous surface treating agent)

Each of the above obtained aqueous surface treating agents was put in a transparent glass container and left at rest at room temperature for one month, and the stability was observed. The results are shown in Table 2.

In Examples 1 to 16, no suspension nor sedimentation occurred, whereby formation of stable aqueous surface treating agents was confirmed.

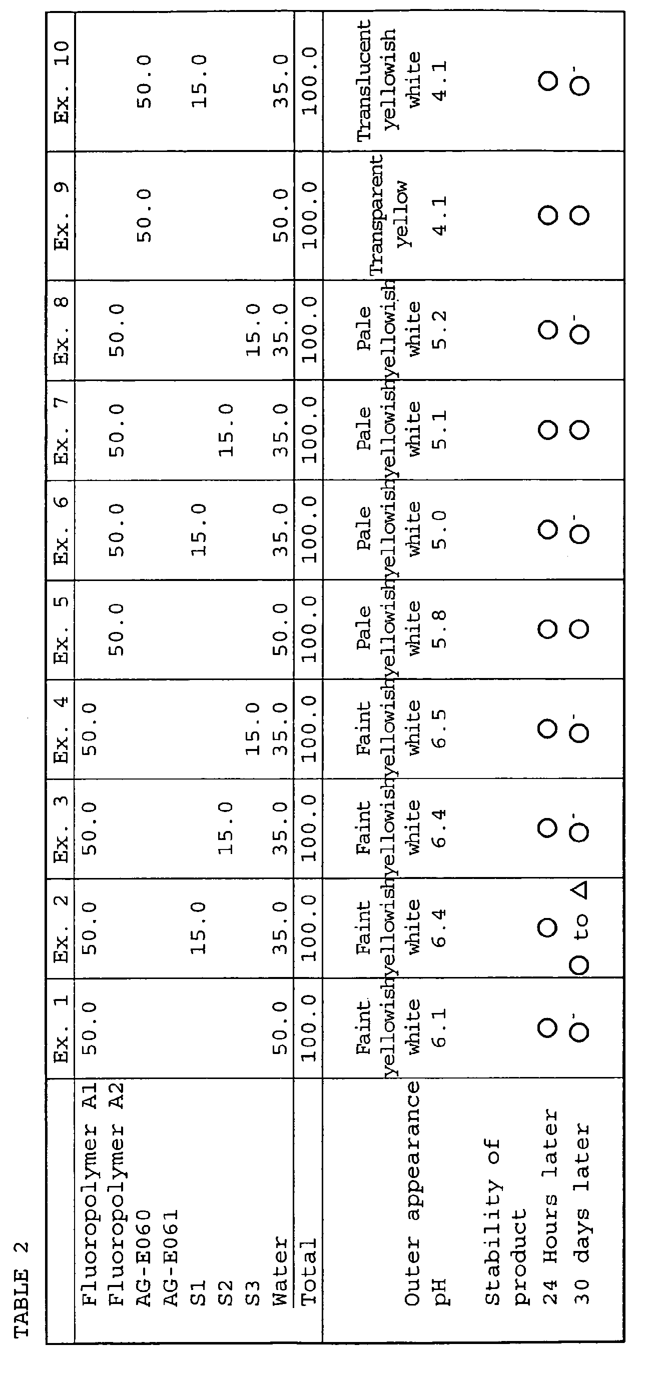

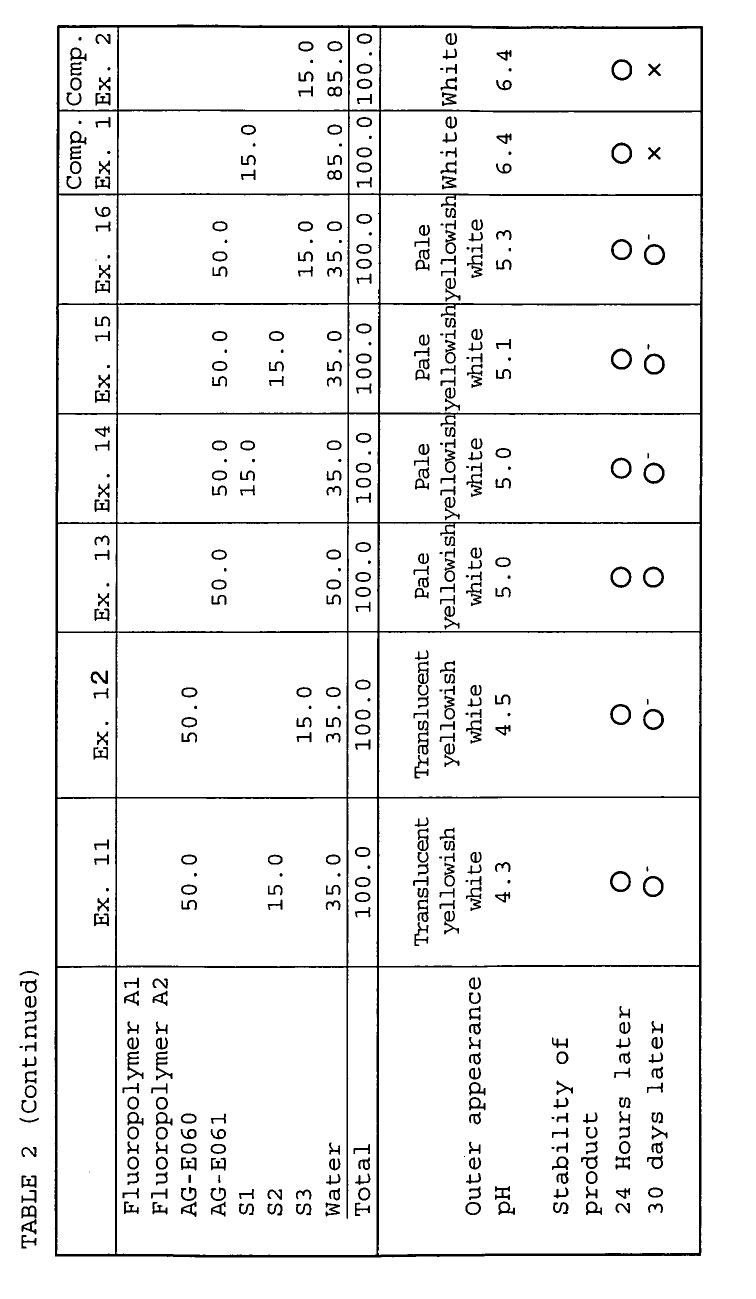

### (Test on application to porous building material (slate))

### (Coating method)

Each of the aqueous surface treating agents as identified in Table 2 was applied to a JIS standard slate by brush coating and air dried at room temperature and further cured at room temperature for 5 days, and the following three evaluations were conducted. Further, a slate (non-treated) having no aqueous surface treating agent applied thereto was subjected to comparative evaluation. The results are shown in Table 3.

### (Evaluation methods)

(1) 0.05 mL of distilled water was dropped, and the surface contact angle was measured.
(2) 0.05 mL of salad oil (manufactured by The Nisshin OilliO Group, Ltd.) was dropped, and the surface contact angle was measured.
(3) 0.05 mL each of salad oil (manufactured by The Nisshin OilliO Group, Ltd.), used engine oil (DMO) and Worcester sauce (manufactured by BULL-DOG SAUCE CO., LTD.) were gently dropped on a sample, and shapes of droplets immediately after dropping, 2 hours later and 4 hours later were observed. Then, the residue was aspirated and the surface was wiped off, and presence or absence of the trace was observed (evaluation after wiping). That is, droplets remaining on the surface was aspirated, and stain remaining on the surface was wiped off by putting the surface with dry filter paper, and evaluation was made based on the degree of stain. On that occasion, regarding the Worcester sauce, only moisture was absorbed in the base material and only a solid remained on the surface, and accordingly stain after wiping was evaluated by the degree of stain after the solid was removed.

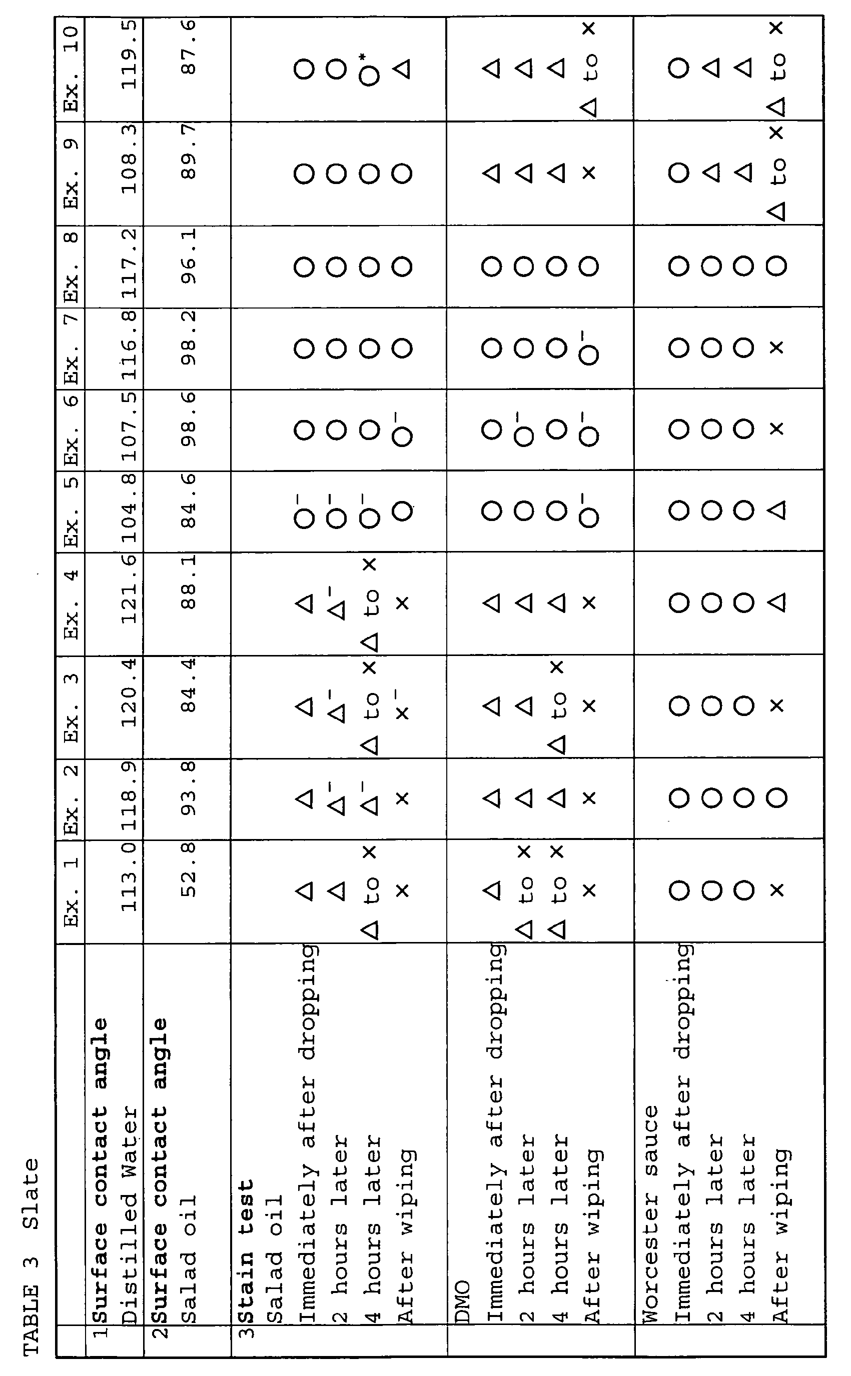

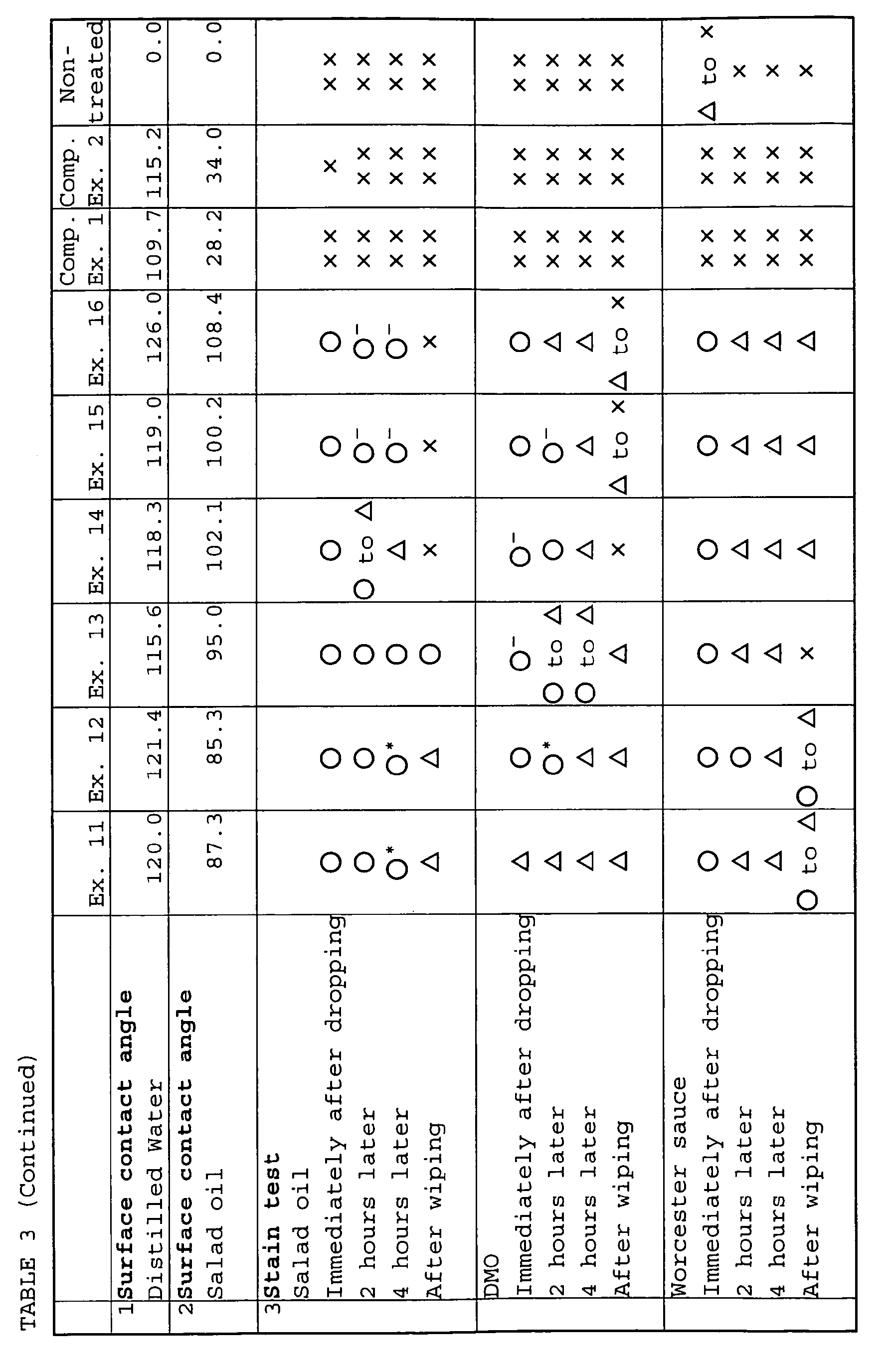

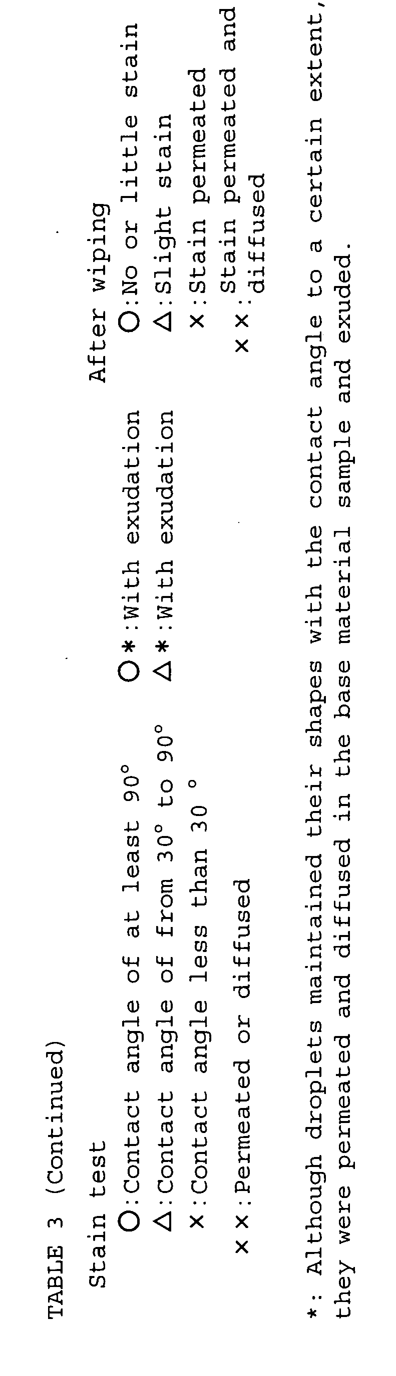

In a case where there is a difference in the degree with the same evaluation result, superior one is marked with a symbol + and inferior one is marked with a symbol -.

### (Test on application to natural stone building material)

### (Coating method)

Each of the aqueous surface treating agents as identified in Table 2 was applied to a plate of granite from Chine (without smooth finish polishing) by brush coating, air dried at room temperature and further cured at room temperature for 5 days, and the same evaluation as in the Test on application to porous building material (slate) was carried out. The results are shown in Table 4.

An effect of inhibiting deposition of stain was confirmed also on high density natural stone as compared with a silane/silicone type (Comparative Examples).

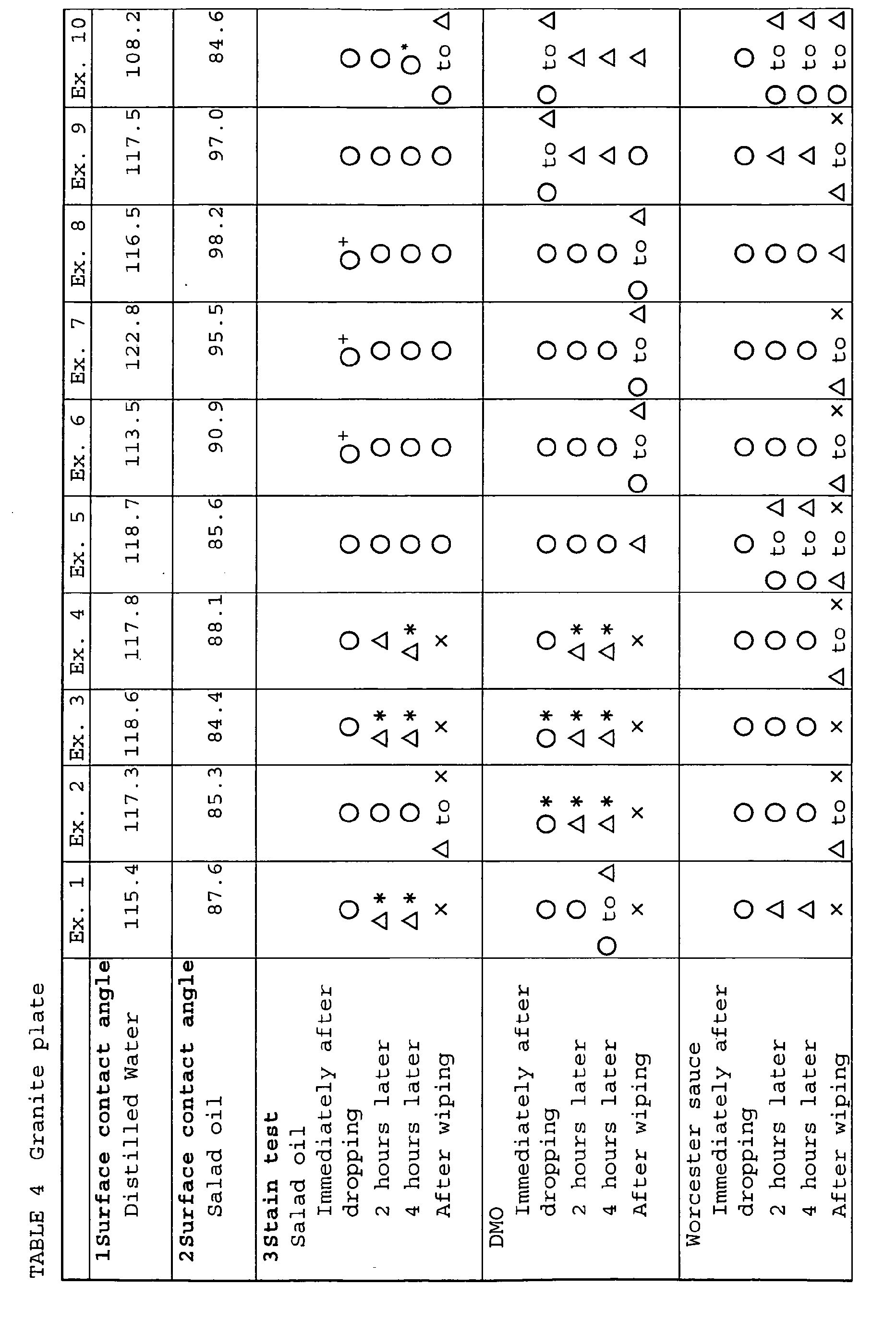

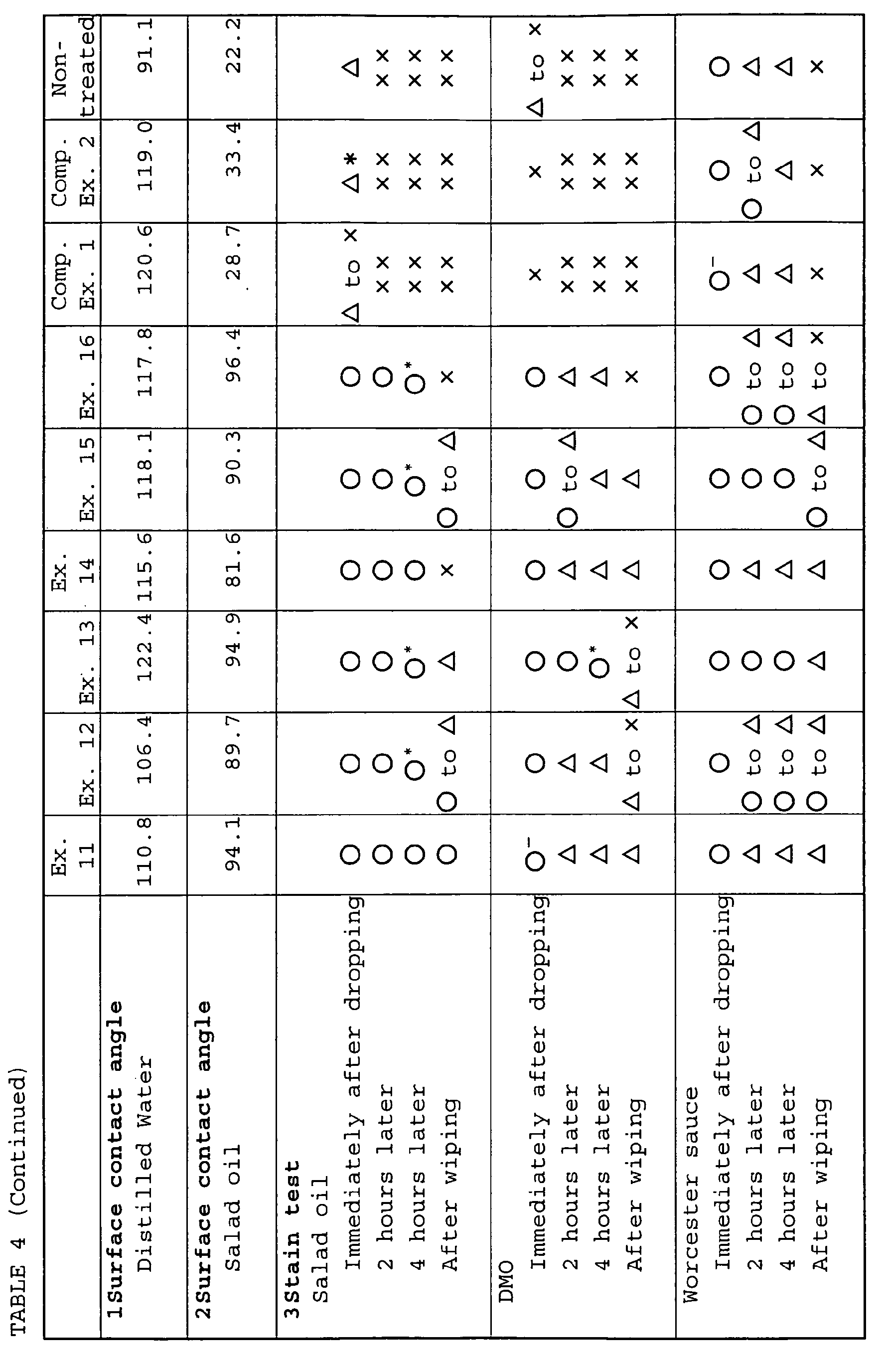

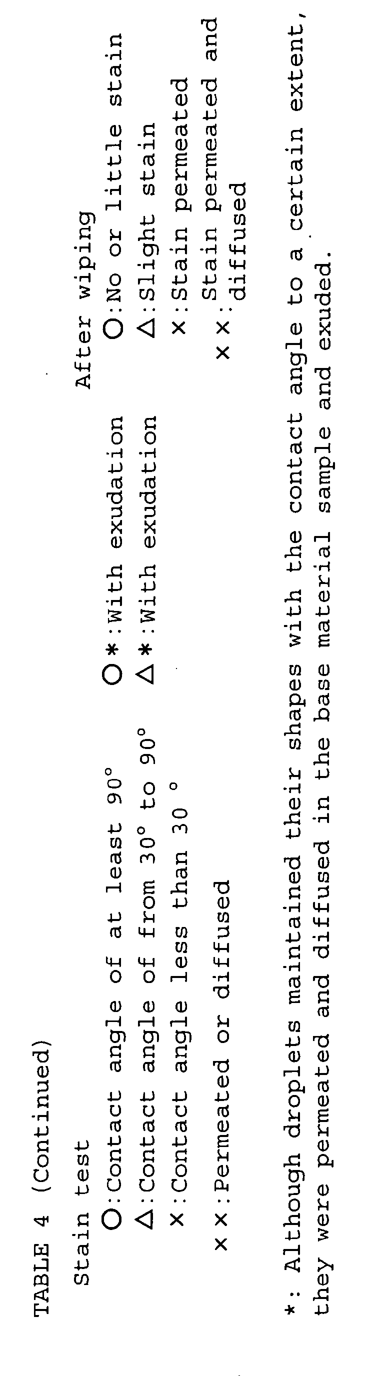

A case where although droplets maintained their shapes with a contact angle to a certain extent, they were permeated and diffused in the base material sample and exuded, is marked with a symbol *. Further, in a case where there is a difference in the degree with the same evaluation result, superior one is marked with a symbol + and inferior one is marked with a symbol -.

### (Evaluation of weather resistance by Sunshine weather -O-meter (SWOM))

Among the aqueous surface treating agents as identified in Table 2, each of the aqueous surface treating agents in Examples 1, 4, 5 and 8 and Comparative Example 2 was applied to a JIS standard slate by brush coating, air dried at room temperature and further cured at room temperature for 5 days. The amount of application of the sample was apparently 500 g/m².

### (Irradiation with ultraviolet rays by SWOM)

The sample after curing was irradiated with ultraviolet rays by SWOM for 300 hours or for 600 hours. The irradiation conditions were such that the irradiance: 255 W/m² (300 to 700 nm), wavelength range: at least 280 nm, temperature: 63°C, relative humidity: 50%RH (continuous), shower: 12 minutes/60 minutes.

### (Evaluation method)

After irradiation with ultraviolet rays by SWOM, used engine oil was dropped on the sample, the shape was observed 2 hours later, and the presence or absence of the trace after the stain was wiped off was observed. The results are shown in Table 5.

**TABLE 5**

| | Ex. 1 | Ex. 4 | Ex. 5 | Ex. 8 | Comp. Ex. 2 | Non-treated |
|---|---|---|---|---|---|---|
| Water contact angle | | | | | | |
| Initial | 123.3 | 131:8 | 110.3 | 109.8 | 127.6 | 0.0 |
| Irradiation for 300 hours | 125.0 | 126.2 | 112.1 | 114.7 | 119.8 0.0 | 0.0 |
| Irradiation for 600 hours | 129.4 | 125.3 | 105.9 | 106.7 | 0.0 | 0.0 |
| | | | | | | |
| Salad oil contact angle | | | | | | |
| Initial | 89.4 | 93.2 | 93.6 | 98.8 | 66.8 | 0.0 |
| Irradiation for 300 hours | 110.2 | 99.6 | 90.4 | 90.5 | 65.8 | 0.0 |
| Irradiation for 600 hours | 104.9 | 92.7 | 68.4 | 80.8 | 31.5 | 0.0 |
| Stain test (2 hours) DMO stain, after left at rest | | | | | | |
| Initial | Δ * | ○ | ○ | ○ | × | × |
| Irradiation for 300 hours | Δ * | ○ | ○ | ○ | × | × |
| Irradiation for 600 hours | Δ * | ○ * | ○ | ○ | × | × |
| | | | | | | |
| DMO stain, after wiping | | | | | | |
| Initial | ○ * | ○ | ○ | ○ | × | × |
| Irradiation for 300 hours | ○ * | ○ | ○ | ○ | × | × |
| Irradiation for 600 hours | Δ | ○ | ○ | ○ | × | × |

A case where although droplets maintained their shapes with a contact angle to a certain extent, they were permeated and diffused in the base material sample and exuded, is marked with a symbol *.

SWOM is considered to be an alternative to evaluation of weather resistance, and in Examples 1, 4, 5 and 8, excellent surface water repellency and oil repellency were obtained even after irradiation with ultraviolet rays, whereby weather resistance was confirmed.

### INDUSTRIAL APPLICABILITY

The aqueous surface treating agent of the present invention is very useful as a treating agent to structures made of architectural/civil engineering materials such as stones or concrete, particularly porous materials.

The entire disclosure of Japanese Patent Application No. 2005-249452 filed on August 30, 2005 including specification, claims and summary is incorporated herein by reference in its entirety.

## Claims

1. An aqueous surface treating agent for architectural/civil engineering structures, comprising at least one fluoropolymer (A) selected from a polyfluoroalkyl group-containing poly(meth)acrylate (A1) and a polyfluoroalkyl group-containing polyurethane (A2) in an aqueous medium.

2. The aqueous surface treating agent according to Claim 1, wherein the above (A1) is a two-stage copolymer of a first component comprising homopolymerized units or copolymerized units of a polyfluoroalkyl group-containing (meth)acrylate and a second component comprising polyfluoroalkyl group-containing (meth)acrylate/non-fluorinated polymerizable compound copolymerized units.

3. The aqueous surface treating agent according to Claim 2, wherein the above (A1) is polymer particles in a state where the second component is present on the surface or in the interior of particles comprising the first component.

4. The aqueous surface treating agent according to any one of Claims 1 to 3, wherein the above (A2) is a reaction product of a compound (a21) having one polyfluoroalkyl group and at least one group containing active hydrogen capable of reacting with an isocyanate group, with a polyisocyanate compound (a22).

5. The aqueous surface treating agent according to any one of Claims 1 to 4, wherein the content of the above (A) is from 1 to 40 mass%.

6. The aqueous surface treating agent according to any one of Claims 1 to 5, wherein the ratio of fluorine atoms in the polyfluoroalkyl group (R^{f} group) ({(the number of fluorine atoms in the R^{f} group)/(the number of hydrogen atoms in a corresponding alkyl group having the same number of carbon atoms as the R^{f} group)}×100) is at least 60%.

7. The aqueous surface treating agent according to any one of Claims 1 to 6, which further contains a surfactant (B).

8. The aqueous surface treating agent according to any one of Claims 1 to 7, which further contains a silicone (C).

9. The aqueous surface treating agent according to any one of Claims 1 to 8, which further contains (D) a silane compound having a hydrolysable group and/or a partially hydrolyzed condensate of a silane compound having a hydrolysable group.

10. A surface treating method, which comprises applying the aqueous surface treating agent as defined in any one of Claims 1 to 9 to the surface of an architectural/civil engineering structure to form a coating film.

11. An architectural/civil engineering structure treated by the method as defined in Claim 10.
